# EUROPÄISCHE PATENTSCHRIFT

(11) **EP 2 299 203 B1**
(45) Veröffentlichungstag und Bekanntmachung des Hinweises auf die Patenterteilung: **23.01.2019**
(21) Anmeldenummer: 10008883.0
(22) Anmeldetag: 26.08.2010
(51) Int. Cl.: F24H 9/16, F16K 31/50, F16K 31/528, F16K 35/02

(54) **Ablassventil**
Outlet valve
Soupape de vidange

(30) Priorität: 14.09.2009 DE 102009041103
(43) Veröffentlichungstag der Anmeldung: 23.03.2011
(73) Patentinhaber: WILO SE, 44263 Dortmund (DE)
(72) Erfinder: Meugnier, Virginie, 18220 Parassy (FR); Le Strat, Olivier, 18700 Oizon (FR)
(74) Vertreter: Cohausz Hannig Borkowski Wißgott

(56) Entgegenhaltungen:
- GB-A- 436 890
- US-A- 3 241 810
- US-A- 3 334 654
- US-A- 5 906 141

## Beschreibung

Die Erfindung betrifft ein Ablassventil für ein wasserführendes Gerät, umfassend einen äußeren Gehäusekörper, der mit einem wasserführenden Gerät verbunden ist oder zumindest verbindbar ist und welcher einen Kanal aufweist, der einen Ventilsitz ausbildet oder zu einem Ventilsitz führt, wobei dieses Ablassventil weiterhin ein Betätigungselement aufweist, das koaxial zum Kanal in den Gehäusekörper eingesetzt ist oder zumindest einsetzbar ist, so dass der Gehäusekörper das Betätigungselement zumindest bereichsweise koaxial umgibt, wobei das Betätigungselement einen bevorzugterweise koaxialen Abflusskanal aufweist und innerhalb des Gehäusekörpers zumindest bereichsweise rotierbar und durch eine Rotation axial verschieblich angeordnet ist und wenigstens ein in Fließrichtung dem Abflusskanal vorgeordnetes Dichtelement aufweist, das durch eine axiale Verschiebung in und außer Eingriff mit dem Ventilsitz bringbar ist und so eine Fluidverbindung zwischen Kanal und Abflusskanal ab- und aufsperrbar ist.

Derartige Ablassventile sind im Stand der Technik bekannt und werden beispielsweise eingesetzt bei Heißwasserboilern. Es besteht so die Möglichkeit, durch ein Verdrehen des Betätigungselementes das genannte Dichtelement vom Ventilsitz abzuheben, da die Verdrehung des Betätigungselementes auch eine axiale Verschiebung relativ zum Gehäusekörper und somit auch zum Ventilsitz bewirkt. Ein Durchgang zwischen dem den Ventilsitz ausbildenden oder zu dem Ventilsitz führenden Kanal und dem Abflusskanal im Betätigungselement kann somit durch die Rotation des Betätigungselementes geöffnet und geschlossen werden.

Als Nachteil bei den bislang im Stand der Technik bekannten Ablassventilen wird es dabei empfunden, dass durch eine Rotation des Betätigungselementes und die dadurch bewirkte axiale Verschiebung nicht nur das Öffnen und Schließen dieses Ablassventils bewirkt wird, sondern auch bewirkt werden kann, dass das Betätigungselement aus dem Gehäusekörper entfernt werden kann. So kann es gegebenenfalls, sofern nicht weitere Sicherungseinrichtungen vorgesehen sind, vorkommen, dass das Betätigungselement aus dem Gehäusekörper entfernt wird, obwohl lediglich der Durchlass dieses Ablassventils geöffnet werden sollte.

Darüber hinaus ist die bisherige Konstruktion dieser Ablassventile auch aus dem Grunde als nachteilig anzusehen, da weitere Verrohrungen oder Schläuche, die stromabwärts am Betätigungselement befestigt sind, zum Zwecke des Befestigens des Betätigungselementes im Gehäusekörper in gleicher Weise mitverdreht werden müssen wie das Betätigungselement, um dieses in den Gehäusekörper einzuführen und darin zu arretieren. Dies erschwert zum einen die Montage, zum anderen ergibt sich eine Verdrillung in den nachfolgenden Schläuchen oder Verrohrungen, die ein entgegenwirkendes Drehmoment erzeugen, welches auf das Betätigungselement im montierten Zustand einwirkt und gegebenenfalls ein Öffnen des Ablassventils bewirken kann.

Ablassventile der eingangs genannten Art, die für ein wasserführendes Gerät geeignet sind, offenbaren beispielsweise auch US 3 241 810 A und GB 436 890 A.

Die Aufgabe der Erfindung ist es daher, ein vorbeschriebenes gattungsgemäßes Ablassventil dahingehend weiterzubilden, dass eine besonders einfache Montage des Betätigungselementes im Grundkörper möglich ist, ebenso wie bevorzugterweise eine Demontage und dass weiterhin eine Rotationsbewegung zum Zwecke des Öffnen und Schließen des Ablassventils unabhängig ist zu einer für die Montage und Demontage des Betätigungselementes notwendigen Bewegung.

Erfindungsgemäß wird diese Aufgabe dadurch gelöst, dass bei einem gattungsgemäßen Ablassventil der eingangs beschriebenen Art in einem Bereich, insbesondere bevorzugt in einem unteren Bereich, in welchem der Gehäusekörper das Betätigungselement koaxial umgibt, zwischen dem Betätigungselement und dem Gehäusekörper koaxial eine Hülse angeordnet ist, wobei das Betätigungselement in der Hülse rotierbar und axial verschieblich gelagert ist und die Hülse im Gehäusekörper ortsfest, drehfest und lösbar befestigt bzw. befestigbar ist und die Hülse auf ihrer Oberfläche wenigstens einen radial nach außen weisenden Rastvorsprung aufweist, der in eine korrespondierende Rastausnehmung an der Innenseite des Gehäusekörpers eingerastet ist.

Der Kerngedanke der Erfindung liegt hier im Wesentlichen darin, eine Hülse als separates Bauteil zwischen Betätigungselement und Gehäusekörper vorzusehen, so dass zwei unabhängig voneinander mögliche Bewegungen gegeben sind, nämlich zum einen eine Bewegungsmöglichkeit des Betätigungselementes innerhalb der Hülse, hier insbesondere die Rotation, die sodann insbesondere durch Zusammenwirkung zwischen Betätigungselement und Hülse eine axiale Verschiebung im Gehäusekörper bewirkt und hierdurch das Öffnen und Schließen des Ablassventils ermöglicht wird. Zum anderen ist die Hülse erfindungsgemäß im Gehäusekörper lösbar befestigt und zu diesem drehfest, so dass eine eventuelle Rotation des Betätigungselementes innerhalb der Hülse die Hülse lagestabil lässt.

Es besteht nunmehr die Möglichkeit, für die Montage des Betätigungselementes innerhalb des Gehäusekörpers das Betätigungselement in die Hülse einzuführen und darin zu arretieren, wonach das Betätigungselement weiterhin rotierbar in der Hülse ist und sich relativ zur Hülse axial verschiebt, wobei weiterhin die dann gebildete Gesamtanordnung aus Betätigungselement und Hülse innerhalb des Gehäusekörpers drehfest befestigt werden kann, insbesondere ohne dass hierzu eine Rotationsbewegung wie bei den bisherigen im Stand der Technik bekannten Ablassventilen nötig ist.

Es kann daher an dem Betätigungselement eines Ablassventils dieser erfindungsgemäßen Art problemlos stromabwärts am Abflusskanal eine weitere Verrohrung oder auch ein Schlauch angebracht werden, der bei der Montage der gebildeten Einheit aus Betätigungselement und Hülse im Gehäusekörper nicht mehr verdreht werden muss und somit auch nach der Montage keine resultierenden Drehmomente auf das Betätigungselement ausübt.

Um die Rotierbarkeit des Betätigungselementes relativ zu der Hülse zu ermöglichen, welche das Betätigungselement zumindest in einem unteren Bereich koaxial umgibt, kann es in einer bevorzugten Ausführungsform vorgesehen sein, dass die Hülse auf ihrer dem Betätigungselement zuweisenden Innenseite wenigstens einen Vorsprung aufweist, der in wenigstens eine Führungskulisse eingreift, die auf der zur Hülse weisenden Außenseite des Betätigungselementes angeordnet ist.

Durch diese Anordnung ergibt es sich, dass bei einer Rotation des Betätigungselementes eine relative Bewegung zwischen Vorsprung und Führungskulisse entsteht, so dass durch die Formgestaltung der Führungskulisse eine axiale Verschiebung des Betätigungselementes bei der Rotation bewirkt werden kann. Hierzu kann es vorgesehen sein, dass die Führungskulisse, die beispielsweise als eine Nut in der Außenseite des Betätigungselementes ausgebildet sein kann, wenigstens bereichsweise eine axiale Steigung aufweist.

Alternativ zu der vorgenannten Ausführungsform kann es unter Erzielung derselben Wirkung auch vorgesehen sein, dass die Hülse auf ihrer dem Betätigungselement zuweisenden Innenseite wenigstens eine Führungskulisse aufweist, in die wenigstens ein Vorsprung eingreift, der auf der zu Hülse weisenden Außenseite des Betätigungselementes angeordnet ist.

In einfachster Ausführung kann eine technische Realisierung von Vorsprung und Führungskulisse auch durch ein Innengewinde auf der Innenseite der Hülse sowie ein Außengewinde auf der Außenseite des Betätigungselementes realisiert sein. Wesentlich für den erfindungsgemäßen Gedanken ist es hierbei, dass die Rotationsbewegung des Betätigungselementes relativ zur Hülse in eine axiale Bewegung des Betätigungselementes relativ zur Hülse umgesetzt wird und aufgrund einer ortsfesten und drehfesten Anordnung der Hülse im Gehäusekörper hierdurch gleichzeitig eine axiale Verschiebung des Betätigungselementes relativ zum Gehäusekörper entsteht und damit wie eingangs beschrieben die Bewegung des Dichtelementes relativ zum Ventilsitz erzielt wird.

Um eine vereinfachte Montage der Hülse und insbesondere einer bereits kombinierten Anordnung aus Betätigungselement und Hülse im Gehäusekörper zu erzielen, kann es in einer bevorzugten Ausführung vorgesehen sein, dass die Hülse innerhalb des Gehäusekörpers in einer axialen Führung angeordnet ist. Dies hat den besonderen Vorteil, dass die Anordnung aus Betätigungselement und Hülse oder aber auch die Hülse alleinig durch ein einfaches axiales Schieben in den Gehäusekörper, insbesondere in dessen unteren Bereich, eingesetzt werden kann. Da somit die Befestigung bzw. das Einsetzen der Hülse in dem Gehäusekörper ohne jegliche Drehung erfolgt, bleiben auch sämtliche Anbauten am Betätigungselement, wie Verrohrung oder Schläuche ohne jegliche Verdrillung bei der Montage.

Hierbei kann in einer bevorzugten Ausführung die Führung zwischen Hülse und Gehäusekörper ausgebildet sein durch wenigstens einen auf der Hülsenoberfläche ausgebildeten, sich in axialer Richtung erstreckenden Vorsprung, der in eine Nut einsetzbar bzw. eingesetzt ist, die auf der der Hülsenoberfläche gegenüberliegenden Innenfläche des Gehäusekörpers angeordnet ist. Dabei kann es sich bei dem Vorsprung, der in der Nut geführt ist, um einen solchen handeln, der beispielsweise über die gesamte axiale Länge der Hülse auf der Hülsenoberfläche angeordnet ist oder der auch nur bereichsweise begrenzt bezogen auf die axiale Erstreckung an der Hülsenoberfläche angeordnet ist. Insbesondere wird ein solcher Vorsprung sodann am Anfang der Hülse angeordnet sein, wobei als Anfang der Hülse derjenige Bereich verstanden wird, der in der Richtung des Einschiebens der Hülse in den Gehäusekörper zuerst in den Gehäusekörper eintaucht.

Mit gleicher Wirkung kann auch hier die Anordnung von Vorsprung und Nut bezogen auf Hülse und Gehäusekörper umgekehrt ausgeführt sein.

Um eine sichere Befestigung der Hülse innerhalb des Gehäusekörpers nach einem Einsetzen bzw. bevorzugt geführten Einschieben zu erzielen, sieht es die Erfindung vor, dass die Hülse relativ zum Gehäusekörper nach dem Einschieben durch eine Verrastung gegen ein Zurückziehen und damit ein Entfernen aus dem Gehäusekörper gesichert ist.

Hierfür weist die Hülse auf ihrer Oberfläche wenigstens einen radial nach außen weisenden Rastvorsprung auf, der in eine korrespondierende Rastausnehmung an der Innenseite des Gehäusekörpers einrastbar ist bzw. nach der Montage eingerastet ist.

Bevorzugt kann die Ausführung der Hülse dabei so gewählt sein, dass der Rastvorsprung radial nachgiebig ist, so dass weiterhin bevorzugt ein Betätigen des Rastvorsprungs von außen möglich ist, wobei dieser in radialer Richtung nach innen relativ zur Hülse bewegt werden kann und somit die Verrastung zwischen Rastvorsprung und Rastausnehmung aufgehoben ist.

Um hier eine Betätigung des Rastvorsprungs zu ermöglichen, kann es vorgesehen sein, dass die korrespondierend angeordnete Rastausnehmung, insbesondere jede Rausausnehmung sich nicht lediglich nur auf der Innenseite des Gehäusekörpers befindet, sondern eine durch die Wandung des Gehäusekörpers hindurch verlaufende Ausnehmung ausbildet, so dass der Rastvorsprung durch diese Ausnehmung in der Oberfläche des Gehäusekörpers von außen zugänglich ist.

Um die eingangs beschriebene radiale Nachgiebigkeit zu erzielen, kann es in einer wiederum bevorzugten Ausführung vorgesehen sein, dass die Hülse in der Hülsenwandung wenigstens zwei zueinander parallel beabstandete, axial verlaufende, insbesondere zum Hülsenanfang oder Hülsenende offene Einschnitte aufweist, die die komplette Wandstärke durchdringen, so dass der Bereich der Hülse zwischen zwei solchen Einschnitten eine radial nachgiebige Zone, insbesondere unter Berücksichtigung offener Einschnitte eine radial nachgiebige Lasche bildet, die wenigstens einen Rastvorsprung trägt.

Eine bevorzugte Ausführung kann hier so gewählt sein, dass bei offenen Einschnitten das offene Ende eines Einschnittes in Richtung zum Hülsenende hin orientiert ist, die Einschnitte in der Hülsenwandung somit vor dem Hülsenanfang enden und sich hierdurch eine Lasche ausbildet, die ihre maximale radiale Beweglichkeit am unteren Hülsenende aufweist.

Um das Betätigen des Rastvorsprungs bzw. einer solchen Lasche, die ein Rastvorsprung trägt, zu ermöglichen, kann die weitere Konstruktion dabei derart gewählt sein, dass der in radialer Richtung unter einer Lasche liegende Bereich des Betätigungselementes genügend Raum zur Verfügung stellt, damit die Lasche in dieser radialen Richtung bewegt werden kann. Hierfür kann es in einer bevorzugten Ausführung vorgesehen sein, dass das Betätigungselement einen den Abflusskanal koaxial umgebenden kegelstumpfförmigen Bereich aufweist, der in Richtung des freien Endes einer Lasche verjüngend ausgebildet ist. Durch die Verjüngung dieses kegelstumpfförmigen Bereichs ergibt sich demnach am freien Ende einer Lasche genügend Raum, um dieses freie Ende radial nach innen drücken zu können.

Ein bevorzugtes Ausführungsbeispiel der Erfindung ist in den nachfolgend näher beschriebenen Figuren dargestellt.

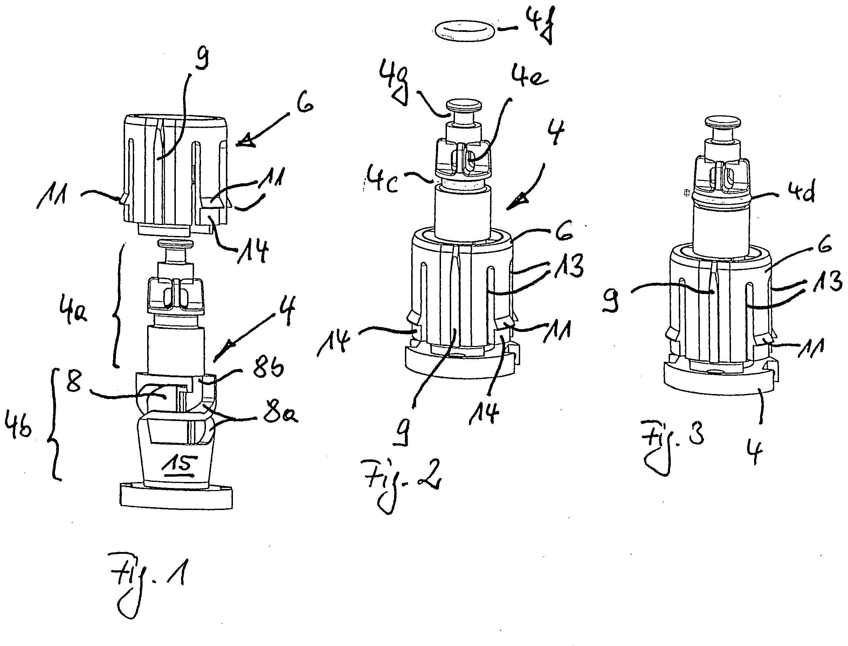

Die Figur 1 zeigt hier das Betätigungselement 4 eines erfindungsgemäßen Ablassventils sowie eine Hülse 6 gemäß der Erfindung. Die Darstellung gemäß Figur 1 ist derart, dass Hülse 6 und Betätigungselement 4 koaxial zueinander ausgerichtet sind, jedoch das Betätigungselement 4 noch nicht in das Innere der Hülse 6 eingeschoben ist.

Das Betätigungselement weist hier einen oberen Bereich 4a auf sowie einen unteren Bereich 4b. Die Montage von Hülse und Betätigungselement 4 ist dabei derart, dass das Betätigungselement 4 koaxial in die Hülse 6 eingeführt wird, wobei sodann die Hülse 6 bis über den unteren Bereich 4b des Betätigungselementes 4 auf dieses aufgeschoben wird. Der obere Bereich des Betätigungselementes liegt somit ausserhalb der Hülse.

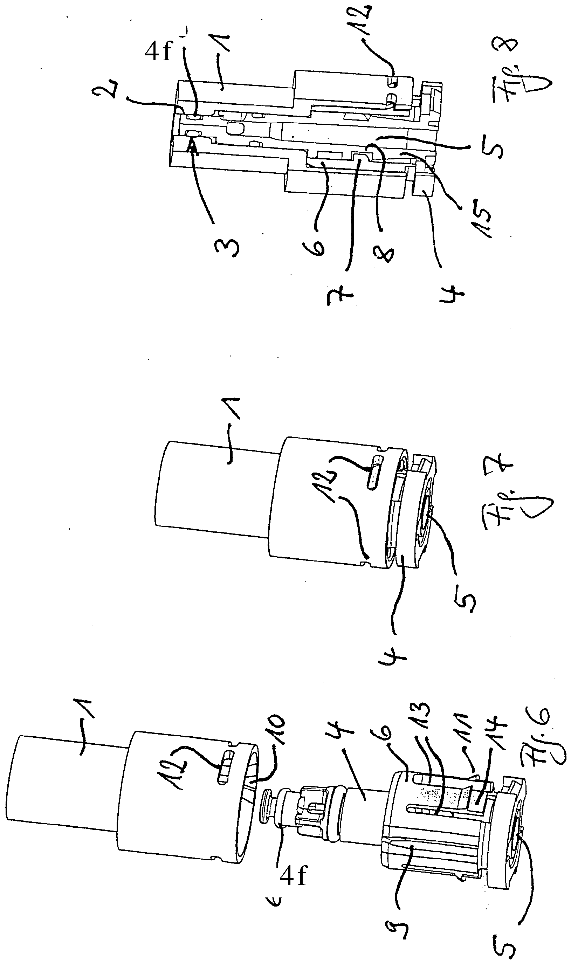

Ein in der Figur 1 nicht dargestellter Vorsprung an der Innenwandung der Hülse 6, der sich radial nach innen erstreckt und als Vorsprung 7 beispielsweise in der Figur 8 erkennbar ist, wird beim axialen Einschieben des Betätigungselementes 4 in den in axialer Richtung offenen Endbereich 8b einer Führungskulisse 8 eingeführt, die sich im unteren Bereich 4b des Betätigungselementes 4 auf dessen Oberfläche befindet und als ausgenommene Nut ausgebildet ist.

Erkennbar ist hier, dass die Führungskulisse 8 folgend nach dem in axialer Richtung offenen Einführungsbereich 8b in einen gebogenen Bereich 8a übergeht, der demnach relativ zur axialen Richtung eine Steigung aufweist, so dass das Betätigungselement 4 durch eine Rotation und dem Entlanggleiten des Vorsprungs 7 an den Steigungsbereichen 8a der Führungskulisse 8 in axialer Richtung weiter in die Hülse eingedreht werden kann. Hier bildet die Führungskulisse 8 eine Art Gewinde mit Bereich, die eine Steigung aufweisen und Bereichen ohne axiale Steigung.

Mit Bezugnahme auf die Figur 2 ist die Position zu erkennen, in welcher die Hülse 6 auf dem Betätigungselement 4 fertig montiert ist. Ersichtlich ist es aufgrund der Konstruktion von Vorsprung und Führungskulisse, so wie es die Figur 1 darstellt, dass nun die Möglichkeit besteht, das Betätigungselement 4 in der Hülse 6 durch eine Rotation relativ zu dieser axial zu verschieben. Eine solche axiale Verschiebung bedingt demnach gleichzeitig eine axiale Verschiebung relativ zu einem Gehäusekörper 1, wie er beispielsweise in der Figur 6, 7 oder 8 gezeigt ist.

Die Figur 2 zeigt weiterhin, dass im oberen Teil 4a des Betätigungselementes 4 eine Ringnut 4c vorgesehen ist, um ein Dichtelement, hier insbesondere einen O-Ring 4d, aufzunehmen. Das Dichtelement 4d gleitet dabei innen an einer Wandung eines Kanals 2 innerhalb des Gehäusekörpers 1 und verhindert so, dass beispielsweise Wasser, welches im Kanal 2 des Gehäusekörpers 1 aus einem wasserführenden Gerät, wie beispielsweise einem Boiler, ansteht, seinen Weg zwischen Gehäusekörper und Betätigungselement nach außen findet.

Der obere Teil 4a des Betätigungselementes 4 weist weiterhin Öffnungen 4e auf, die In Fließrichtung vor dem Dichtungselement 4d angeordnet sind und durch welche Wasser, welches im Kanal 2 des Gehäusekörpers ansteht, in das Innere des Betätigungselementes 4 und dort insbesondere in einen koaxialen inneren Kanal 5 eintreten kann. In den Kanal 5 eintretendes Wasser kann demnach durch diesen Kanal bis zum unteren Ende des Betätigungselementes 4 geführt werden und von dort durch eine Verrohrung oder Schläuche abgelassen werden.

Um nun zu bewirken, dass Wasser nur wunschweise durch die Öffnungen 4e in den inneren Bereich des Kanals 5 gelangt, ist es am oberen Ende des oberen Bereichs 4a des Betätigungselementes 4 vorgesehen, ein weiteres Dichtelement 4f anzuordnen, beispielsweise einen O-Ring, der in eine entsprechende Ringnut 4g eingelegt wird.

Das Dichtelement 4f wirkt hier zusammen mit einem Anfangsbereich des Kanals 2 im Gehäusekörper 1 und bildet mit dem Innenbereich des Anfangs des Kanals ein Ventilelement, wobei die Innenwandung dieses Anfangsbereichs in diesem Fall einen Ventilsitz ausbildet, an welchem das Dichtelement 4f durch axiale Verschiebung des Betätigungselementes, die durch eine Rotation desselben hervorgerufen wird, entlang bewegt werden kann. Ein Öffnen des Ventils erfolgt dann, wenn die axiale Verschiebung derart weit erfolgt, dass das Dichtelement 4f aus dem Anfangsbereich des Kanals 2 mit einem geringeren Durchmesser in einem Bereich des Kanals 2 mit einem demgegenüber erweiterten Durchmesser gelangt, so dass das Wasser in diesem erweiterten Kanalbereich am Dichtelement 4f vorbeiströmen kann, an einem weiteren Umströmen des Betätigungselementes 4 jedoch aufgrund des Dichtelementes 4d gehindert ist und sodann durch die Öffnungen 4e in den inneren Kanal 5 eintritt.

Es ist somit ersichtlich, dass durch die Rotation und durch die dadurch hervorgerufene axiale Verschiebung ein Öffnen und Schließen des so gebildeten Ablassventils ermöglicht wird.

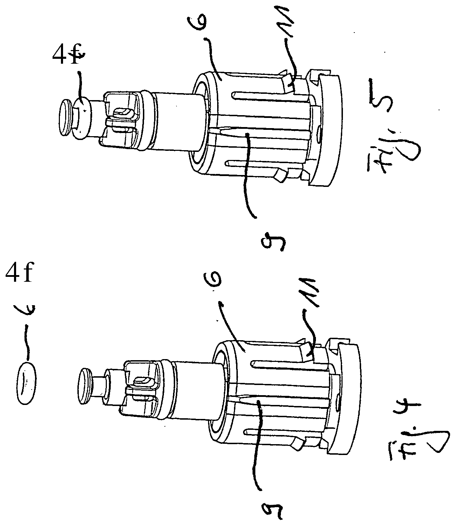

Die Figuren 1 - 6 zeigen weiterhin, dass die Hülse 7 auf ihrer äußeren Oberfläche einen Führungsvorsprung 9 aufweist, der in Richtung zum Anfang der Hülse (oberes Ende bzgl. der Figuren) in dieser Ausführungsform verjüngend zulaufend ist in seiner axialen Erstreckung. Dieser Führungsvorsprung 9 kann beim Einsetzen des Betätigungselementes 4 zusammen mit der Hülse 6 in eine sich in axialer Richtung erstreckende Führungsnut 10 eingeführt werden, die an der Innenwandung des unteren Bereichs des Gehäusekörpers 1 angeordnet ist und beispielsweise einen zur Einführung erweiterten Bereich aufweisen kann. Um das Betätigungselement zusammen mit der Hülse somit im Gehäusekörper 1 zu montieren, bedarf es somit lediglich einer axialen Bewegung der Gesamtanordnung aus Betätigungselement und Führungshülse ohne jegliche Rotation, wobei durch die Wirkung von Vorsprung 9 und Führungsnut 10 sowohl eine axiale Führung als auch eine Drehhemmung bewirkt ist.

Um eine sichere Befestigung der Hülse 6 zusammen mit dem Betätigungselement 4 im Gehäusekörper 1 zu bewirken, weist hier die Hülse 6 auf Ihrer Oberseite mehrere, insbesondere am unteren Ende angeordnete Rastvorsprünge 11, die jeweils auf in radialer Richtung nachgiebigen Laschen angeordnet sind und sich radial nach außen erstrecken. Die Laschen sind hier derart gebildet, dass beginnend vom unteren Ende der Hülse 6 diese Hülse 6 über ihre gesamte Wandstärke eingeschnitten ist, so dass eine Lasche 14, welche den Rastvorsprung 11 trägt, ein vollständig frei bewegliches unteres Ende aufweist und am oberen Ende in den Rest der Hülse übergeht. Ein Rastvorsprung 11 weist hier ergänzend noch eine Anlaufschräge in axialer Richtung auf, um ein leichteres Einführen der Hülse 6 in den Gehäusekörper 1 zu ermöglichen.

Durch die Anlaufschräge wird demnach eine nach radial innen gerichtete Kraft erzeugt, sobald der Rastvorsprung 11 mit dem unteren Ende des Gehäusekörpers 1 in Verbindung kommt. Am Ende des Einschiebevorgangs weicht demnach die zurückgedrückte Lasche 14 in ihrer Ausgangsposition zurück, so dass der Rastvorsprung 11 mit einer korrespondierenden Rastausnehmung 12 am unteren Ende des Gehäusekörpers 1 in Eingriff kommt und somit die Hülse gegen ein axiales Zurückziehen gesichert ist.

Da wie vorliegend in den Figuren 6, 7 und 8 erkennbar die zum Rastvorsprung 11 korrespondierenden Rastausnehmungen 12 als durch die Wandung des Gehäuseunterteils 1 hindurchgehende Ausnehmungen ausgebildet sind, besteht hier auch die Möglichkeit, die Rastvorsprünge 11 durch diese Ausnehmung 12 hindurch zu bedienen, also radial nach innen zu drücken und somit die Verrastung zwischen Rastvorsprung 11 und Ausnehmung 12 zu lösen.

Um diesen Vorgang des Lösens zu ermöglichen, weist der untere Teil 4b des Betätigungsteils 4 einen sich konisch nach unten verjüngenden Teil 15 auf, so dass sich am unteren Ende der Lasche 14 in radial innenliegender Richtung ein Freiraum ergibt, in den das freie Ende der Lasche 14 zurückweichen kann.

Die im Teilschnitt dargestellte Figur 8 verdeutlicht, dass das Betätigungselement 4 gegenüber den bisherigen im Stand der Technik bekannten Ventilkonstruktionen nunmehr mittelbar über eine zwischen Betätigungselement und Gehäusekörper 1 angeordnete Hülse 6 in diesem befestigt ist. Es kann hier eine rotierende Bewegung des Betätigungselementes 4 innerhalb der Hülse und somit gleichzeitig innerhalb des Gehäusekörpers 1 erfolgen, um die Ventilfunktion zu ermöglichen.

Die Gesamtanordnung aus Betätigungselement 4 und Hülse 6 kann bei dieser Ausführungsform jedoch in vorteilhafter Weise gegenüber dem Stand der Technik nunmehr durch eine rein axiale Bewegung ohne jegliche Verdrehung innerhalb des Gehäusekörpers befestigt werden, da nunmehr maßgeblich die Befestigung des Betätigungselementes 4 mittelbar über die axial im Gehäusekörper 1 verschiebliche und darin verrastbare Hülse 6 erfolgt.

Die Bewegungen zum Öffnen und Schließen des Ventils sowie zum Demontieren und Montieren des Betätigungselementes sind nunmehr durch das Zusatzteil der Hülse zwischen Betätigungselement 4 und Gehäusekörper 1 vollständig voneinander entkoppelt, was bewirkt, dass zur Montage oder Demontage keinerlei Drehmomente mehr auf nach dem Betätigungselement 4 flussabwärts folgende Verrohrungen, Schläuche oder sonstige Verbindungen ausgeübt werden müssen.

Darüber hinaus kann bei einer rotativen Betätigung des Betätigungselementes 4 zum Zwecke des Öffnen und Schließen des Ventils nicht mehr versehentlich das Betätigungselement 4 aus dem Gehäusekörper 1 entfernt werden, da das Betätigungselement 4 über die Hülse 6 auch bei einer Rotation sicher gegen das Entfernen aus dem Gehäusekörper in diesem befestigt ist.

## Patentansprüche

1. Ablassventil für ein wasserführendes Gerät, umfassend einen äußeren Gehäusekörper (1), der mit einem wasserführenden Gerät verbindbar ist und welcher einen Kanal (2) aufweist, der einen Ventilsitz (3) ausbildet oder zu einem Ventilsitz (3) führt und ein Betätigungselement (4), dass koaxial zum Kanal (2) in den Gehäusekörper (1) eingesetzt ist, so dass der Gehäusekörper (1) das Betätigungselement (4) zumindest bereichsweise koaxial umgibt, wobei das Betätigungselement (4) einen Abflusskanal (5) aufweist und innerhalb des Gehäusekörpers (1) zumindest bereichsweise rotierbar und durch eine Rotation axial verschieblich angeordnet ist und wenigstens ein in Fließrichtung dem Abflusskanal (5) vorgeordnetes Dichtelement (4d) aufweist, dass durch die axiale Verschiebung in und ausser Eingriff mit dem Ventilsitz (3) bringbar ist und so eine Fluidverbindung zwischen Kanal (2) und Abflusskanal (5) ab- und aufsperrbar ist, **dadurch gekennzeichnet, dass** in einem Bereich, in welchem der Gehäusekörper (1) das Betätigungselement (4) koaxial umgibt, zwischen dem Betätigungselement (4) und dem Gehäusekörper (1) koaxial eine Hülse (6) angeordnet ist, wobei das Betätigungselement (4) in der Hülse (6) rotierbar und axial verschieblich gelagert ist und die Hülse (6) im Gehäusekörper (1) ortsfest, drehfest und lösbar befestigt ist und die Hülse (6) auf ihrer Oberfläche wenigstens einen radial nach außen weisenden Rastvorsprung (11) aufweist, der in eine korrespondierende Rastausnehmung (12) an der Innenseite des Gehäusekörpers (1) eingerastet ist.

2. Ablassventil nach Anspruch 1, **dadurch gekennzeichnet, dass** die Hülse (6) auf ihrer dem Betätigungselement (4) zuweisenden Innenseite wenigstens einen Vorsprung (7) aufweist, der in wenigstens eine Führungskulisse (8) eingreift, die auf der der Hülse (6) zuweisenden Außenseite des Betätigungselementes (4) angeordnet ist oder die Hülse auf ihrer dem Betätigungselement zuweisenden Innenseite wenigstens eine Führungskulisse aufweist, in die wenigstens ein Vorsprung eingreift, der auf der der Hülse zuweisenden Außenseite des Betätigungselementes angeordnet ist, wobei die Zusammenwirkung zwischen Führungskulisse (8) und dem wenigstens einen Vorsprung (7) bei einer Rotation des Betätigungselementes (4) dessen axiale Verschiebung bewirkt.

3. Ablassventil nach Anspruch 2, **dadurch gekennzeichnet, dass** das die Führungskulisse (8) wenigstens bereichsweise eine axiale Steigung (8a) aufweist.

4. Ablassventil nach einem der vorherigen Ansprüche, **dadurch gekennzeichnet, dass** die Hülse (6) innerhalb des Gehäusekörpers (1) in einer axialen Führung angeordnet ist

5. Ablassventil nach Anspruch 4, **dadurch gekennzeichnet, dass** die Führung zwischen Hülse (6) und Gehäusekörper (1) ausgebildet ist durch wenigstens einen auf der Hülsenoberfläche ausgebildeten sich in axialer Richtung erstreckenden Vorsprung (9), der in eine Nut (10) eingesetzt ist, die auf der der Hülsenoberfläche gegenüberliegenden Innenfläche des Gehäusekörpers (1) angeordnet ist.

6. Ablassventil nach einem der vorherigen Ansprüche, **dadurch gekennzeichnet, dass** der Rastvorsprung (11) radial nachgiebig ist.

7. Ablassventil nach Anspruch 6, **dadurch gekennzeichnet, dass** die Hülse (6) in der Hülsenwandung wenigstens zwei zueinander parallel beabstandete axiale, zum Hülsenanfang oder Hülsenende offene Einschnitte (13) aufweist und der Bereich der Hülse (6) zwischen zwei Einschnitten (13) eine radial nachgiebige Zone (14)bildet, die wenigstens einen Rastvorsprung (11) trägt.

8. Ablassventil nach Anspruch 7, **dadurch gekennzeichnet, dass** das Betätigungselement (4) einen den Abflusskanal (5) koaxial umgebenden kegelstumpfförmigen Bereich (15) aufweist, der in Richtung des freien Endes einer Lasche (14) verjüngend ausgebildet ist.

## Claims

1. Discharge valve for a water-conducting device, comprising an outer housing body (1) which is able to be connected to a water-conducting device and which has a duct (2), said duct forming a valve seat (3) or leading to a valve seat (3), and comprising an actuation element (4) which is inserted into the housing body (1) coaxially with respect to the duct (2) such that the housing body (1) surrounds the actuation element (4) coaxially at least regionally, wherein the actuation element (4) has an outflow duct (5) and is arranged in a manner at least regionally rotatable and, by rotation, axially displaceable within the housing body (1) and has at least one sealing element (4d) which is arranged upstream of the outflow duct (5) in the flow direction and which, by the axial displacement, is able to be brought into and out of engagement with the valve seat (3), and in this way a fluidic connection between the duct (2) and the outflow duct (5) is able to be blocked and unblocked, **characterized in that**, in a region in which the housing body (1) surrounds the actuation element (4) coaxially, a sleeve (6) is arranged coaxially between the actuation element (4) and the housing body (1), wherein the actuation element (4) is mounted in a manner rotatable and axially displaceable in the sleeve (6) and the sleeve (6) is fastened in a manner positionally fixed, rotationally conjoint and detachable in the housing body (1) and the sleeve (6) has, on its surface, at least one radially outwardly facing latching projection (11) which is latched into a corresponding latching recess (12) on the inner side of the housing body (1).

2. Discharge valve according to Claim 1, **characterized in that** the sleeve (6) has, on its inner side facing the actuation element (4), at least one projection (7) which engages into at least one guide slot (8) which is arranged on that outer side of the actuation element (4) facing the sleeve (6), or the sleeve has, on its inner side facing the actuation element, at least one guide slot into which at least one projection which is arranged on that outer side of the actuation element facing the sleeve engages, wherein, during a rotation of the actuation element (4), the interaction between the guide slot (8) and the at least one projection (7) brings about the axial displacement of said element.

3. Discharge valve according to Claim 2, **characterized in that** the guide slot (8) has an axial pitch (8a) at least regionally.

4. Discharge valve according to one of the preceding claims, **characterized in that** the sleeve (6) is arranged in an axial guide within the housing body (1).

5. Discharge valve according to Claim 4, **characterized in that** the guide between the sleeve (6) and the housing body (1) is formed by at least one axially extending projection (9), which is formed on the sleeve surface and which is inserted into a groove (10) which is arranged on that inner surface of the housing body (1) opposite the sleeve surface.

6. Discharge valve according to one of the preceding claims, **characterized in that** the latching projection (11) is radially flexible.

7. Discharge valve according to Claim 6, **characterized in that** the sleeve (6) has, in the sleeve wall, at least two axial incisions (13) which are spaced apart in a mutually parallel manner and which are open with respect to the start of the sleeve or the end of the sleeve, and the region of the sleeve (6) between two incisions (13) forms a radially flexible zone (14) which bears at least one last projection (11).

8. Discharge valve according to Claim 7, **characterized in that** the actuation element (4) has a frustoconical region (15) which surrounds the outflow duct (5) coaxially and which is formed in a manner tapering in the direction of the free end of a lug (14).

## Revendications

1. Soupape de vidange pour un appareil de canalisation d'eau, comprenant un corps de boîtier extérieur (1) qui peut être raccordé à un appareil de canalisation d'eau et qui présente un canal (2) qui constitue un siège de soupape (3) ou qui conduit à un siège de soupape (3) et un élément d'actionnement (4) qui est inséré coaxialement par rapport au canal (2) dans le corps de boîtier (1) de telle sorte que le corps de boîtier (1) entoure au moins en partie coaxialement l'élément d'actionnement (4), l'élément d'actionnement (4) présentant un canal de vidange (5) et étant disposé à l'intérieur du corps de boîtier (1) de manière au moins en partie rotative et déplaçable axialement par une rotation, et présentant au moins un élément d'étanchéité (4d) monté en amont du canal de vidange (5) dans la direction d'écoulement, qui peut être amené par le déplacement axial en prise et hors d'engagement avec le siège de soupape (3), et une conduite fluidique entre le canal (2) et le canal de vidange (5) pouvant de ce fait être fermée et ouverte, **caractérisée en ce qu'**une douille (6) est disposée coaxialement entre l'élément d'actionnement (4) et le corps de boîtier (1), dans une région dans laquelle le corps de boîtier (1) entoure coaxialement l'élément d'actionnement (4), l'élément d'actionnement (4) étant supporté dans la douille (6) de manière rotative et déplaçable axialement, et la douille (6) étant fixée dans le corps de boîtier (1) de manière fixe, solidaire en rotation et amovible, et la douille (6) présentant sur sa surface au moins une saillie d'encliquetage (11) orientée radialement vers l'extérieur, qui est encliquetée dans un évidement d'encliquetage correspondant (12) au niveau du côté intérieur du corps de boîtier (1).

2. Soupape de vidange selon la revendication 1, **caractérisée en ce que** la douille (6) présente, au niveau de son côté intérieur tourné vers l'élément d'actionnement (4), au moins une saillie (7) qui s'engage dans au moins une coulisse de guidage (8) qui est disposée du côté extérieur de l'élément d'actionnement (4) tourné vers la douille (6), ou la douille présente, sur son côté intérieur tourné vers l'élément d'actionnement, au moins une coulisse de guidage dans laquelle s'engage au moins une saillie qui est disposée sur le côté extérieur de l'élément d'actionnement tourné vers la douille, la coopération entre la coulisse de guidage (8) et l'au moins une saillie (7), lors d'une rotation de l'élément d'actionnement (4), provoquant son déplacement axial.

3. Soupape de vidange selon la revendication 2, **caractérisée en ce que** la coulisse de guidage (8) présente au moins en partie un pas axial (8a).

4. Soupape de vidange selon l'une quelconque des revendications précédentes, **caractérisée en ce que** la douille (6) est disposée à l'intérieur du corps de boîtier (1) dans un guide axial.

5. Soupape de vidange selon la revendication 4, **caractérisée en ce que** le guidage entre la douille (6) et le corps de boîtier (1) est réalisé par au moins une saillie (9) réalisée sur la surface de la douille et s'étendant dans la direction axiale, qui est insérée dans une rainure (10) qui est disposée sur la surface intérieure du corps de boîtier (1) opposée à la surface de la douille.

6. Soupape de vidange selon l'une quelconque des revendications précédentes, **caractérisée en ce que** la saillie d'encliquetage (11) est flexible radialement.

7. Soupape de vidange selon la revendication 6, **caractérisée en ce que** la douille (6) présente, dans la paroi de douille, au moins deux entailles (13) axiales espacées parallèlement l'une à l'autre, ouvertes vers le début de la douille ou l'extrémité de la douille et la région de la douille (6) entre deux entailles (13) forme une zone flexible radialement (14) qui porte au moins une saillie d'encliquetage (11).

8. Soupape de vidange selon la revendication 7, **caractérisée en ce que** l'élément d'actionnement (4) présente une région (15) de forme tronconique entourant coaxialement le canal de vidange (5), qui est réalisée de manière à se rétrécir dans la direction de l'extrémité libre d'une patte (14).
